# EUROPEAN PATENT APPLICATION

(11) **EP 0 986 049 A1**
(43) Date of publication of application: **15.03.2000**
(21) Application number: 99305663.9
(22) Date of filing: 16.07.1999
(51) Int. Cl.: G11B 5/48

(54) **Head assembly and disk drive**

(30) Priority: 11.09.1998 JP 25882598
(71) Applicant: FUJITSU LIMITED, Kawasaki-shi, Kanagawa 211-8588 (JP)
(72) Inventor: Watanabe, Toru, Nakahara-ku, Kawasaki-shi, Kanagawa211-8 (JP); Mizoshita, Yoshifumi, Nakahara-ku, Kawasaki-shi, Kanagawa211-8 (JP); Hiraoka, Shinji, Nakahara-ku, Kawasaki-shi, Kanagawa211-8 (JP)
(74) Representative: Stebbing, Timothy Charles

(57) **Abstract**

A head assembly (24) for a disk drive having an increased resonant point in a seek direction achieves high-accuracy positioning of a magnetic head slider (26). The head assembly (24) includes a load beam (28) having a spring portion (28a) having a first thickness, and a rigid portion (28b) having a second thickness. The second thickness, which is greater than the first thickness, may be realised by affixing a reinforcing plate (44) to a portion of the load beam (28), or it may be realized by simply integrally forming the load beam (28) with two different thicknesses. A gimbal (34) is fixed to a front end portion of the load beam (28), and a head slider (26) is mounted on the gimbal (34). The gimbal (34) may be integral with the load beam (28). Preferably a plurality of signal lines are formed by printing on the load beam (28).

## Description

The present invention relates to a magnetic disk drive for a computer and a head assembly used in the magnetic disk drive, and more particularly, to an assembly having low stiffness and a high resonance.

In recent years, magnetic disk drives have been reduced in size and recording density has increased. To realize these advantages, it has become desirable to read and write with a magnetic head slider which flies a microscopic height from a magnetic disk as a recording medium, or comes into contact therewith in reading/writing data to/from the magnetic disk.

Further, a head assembly used in the magnetic disk drive needs low gimbal stiffness for making the head slider compensate for a mounting error of the head assembly or warpage of the magnetic disk, and to also have a high resonance in a seek direction, for high-accuracy positioning of a magnetic head.

In view of these requirements, a gimbal structure using a pivot for supporting the head slider through a gimbal is known. The gimbal is fixed to a front end portion of a load beam by spot welding, and the head slider is mounted on the gimbal. The load beam has a spring portion for applying loading force to the head slider.

The pivot is formed at the front end portion of the load beam to support the head slider through the gimbal. The load beam further has a rigid portion formed at its opposite side edges with a pair of ribs. The load beam and gimbal are typically formed of stainless steel, for example. In one example, the thickness of the load beam is about 43 µm, and the thickness of the gimbal is about 20 µm.

The head assembly is intended mainly to stably fly the head slider over the magnetic disk. Accordingly, the net upward and downward forces, or moment, on the head slider in operation must be zero. To meet this requirement, the slider mounting portion at the gimbal is raised by a step corresponding to the height of the pivot.

To achieve high-density recording and high-speed operation of the magnetic disk drive, the head assembly needs improvement in the seek-directional resonance, which bears on the accuracy of positioning of a magnetic head element. It also needs a reduction in gimbal stiffness for stabilizing the flying height of the head slider.

Further, a low load is required to reduce wear in a contact start and stop (CSS) operation, particularly since printed wiring for wiring four or more signal lines is required in relation to the adoption of a magnetoresistive head (MR head).

The resonance in the seek direction has a torsion component, so that not only a stiffness in the seek direction but also a torsional stiffness must be increased. The rigid portion of the conventional load beam with a pair of ribs has a high bending stiffness, but does not have a sufficient torsional stiffness as in a flat plate.

While the stiffness can be increased by increasing the thickness of the load beam, an increase in mass of the head assembly results in a small degree of contribution to an increase in resonance. Further, the increase in mass of the head assembly causes a reduction in impact resistance.

The gimbal structure having the pivot has an advantage such that vibrations of the head slider in the seek direction can be suppressed by the pivot. A force of suppressing the vibrations is determined by a frictional force between the pivot and a lower surface of the gimbal opposite to its slider mounting surface, and this frictional force is determined by a load for pressing the head slider on the disk upon loading.

A low load of 1 gf or less is required to improve the reliability of CSS. Accordingly, the current load of 2 to 3 gf in the conventional head assembly must be reduced. However, a reduction in this load results in a reduction in the frictional force of the pivot to the gimbal, so that the force of suppressing vibrations of the head slider in the seek direction is also reduced, resulting in easy slippage of the pivot. This causes a reduction in resonance and high-accuracy positioning of the magnetic head becomes more difficult.

Further, in a recent magnetic disk drive, higher-speed rotation of a magnetic disk such as 10,000 rpm has been required. As a result, the ribs formed at the rigid portion of the load beam are oscillated by an air flow due to high-speed rotation of the magnetic disk to cause instability of positioning of the head slider.

It is a consideration of the present invention to provide a new and improved head assembly having a low-stiffness gimbal and a high resonance.

It is another consideration of the invention to provide a new and improved magnetic disk drive which can realize high-density recording and high-speed operation with a head assembly having a low-stiffness gimbal and a high resonance.

In accordance with an aspect of the present invention, a head assembly has a load beam. The load beam has a first portion having a first thickness and a second portion having a second thickness larger than the first thickness. A gimbal is provided at the second portion of the load beam, and a head slider is mounted on the gimbal.

Preferably, the gimbal has a fixed portion fixed to a front end portion of the load beam and a slider mounting portion raised from the fixed portion by a given height. Further, a pivot is fixed to the front end portion of the load beam and is kept in contact with the lower surface of the slider mounting portion to support the head assembly.

Preferably, the load for pressing the head slider on the disk in loading the head slider on the disk is set to 1 gf or less, and a preload is applied from the pivot to the gimbal in unloading the head slider.

In accordance with another aspect of the present invention, there is provided a head assembly having a flat load beam with a substantially uniform thickness. A reinforcing plate is fixed to a portion of the load beam, and a gimbal is provided at that portion of the load beam. A head slider is mounted on the gimbal. in this aspect of the invention, the gimbal is integral with the load beam, and a pivot is formed at a front end portion of the reinforcing plate to support the head slider through the gimbal. The head slider has a head element, and a plurality of signal lines connected at their first ends to the head element are formed on the load beam.

Preferably, the load for pressing the head slider on the disk in loading the head slider on the disk is set to 1 gf or less, and a preload is applied from the pivot to the gimbal in unloading the head slider.

In accordance with a further aspect of the present invention, there is provided a disk drive having a housing, an actuator arm rotatably mounted in the housing, and an actuator mounted to the actuator arm for moving the actuator arm. A flat load beam having a uniform thickness is mounted to the actuator arm. A reinforcing plate is fixed to a portion of the load beam, and a gimbal is provided at that portion of the load beam. A head slider is mounted on the gimbal for reading/writing data from/to a rotating disk.

The flat load beam may be replaced by a load beam having a first portion having a first thickness and a second portion having a second thickness larger than the first thickness. In this case, the reinforcing plate may be omitted.

A detailed description will now be given, by way of example, with reference to the accompanying drawings, in which:
FIG. 1 is a perspective view of a magnetic disk drive with its cover removed;
FIG. 2A is a perspective view of a head assembly according to a first preferred embodiment of the present invention, and FIG. 2B is a longitudinal sectional view of the head assembly shown in FIG. 2A;
FIG. 3 is a longitudinal sectional view of a head assembly according to a second preferred embodiment of the present invention;
FIG. 4A is a perspective view of a head assembly according to a third preferred embodiment of the present invention, and FIG. 4B is a longitudinal sectional view of the head assembly shown in FIG. 4A;
FIG. 5 is an exploded perspective view of the head assembly according to the third preferred embodiment;
FIG. 6A is a perspective view of a head assembly according to a fourth preferred embodiment of the present invention, and FIG. 6B is a longitudinal sectional view of the head assembly shown in FIG. 6A;
FIG. 7 is a sectional view of a part of an MR head;
FIG. 8A is a detailed top plan view of the head assembly according to the fourth preferred embodiment, and FIG. 8B is an elevational view of FIG. 8A;
FIG. 9 is a detailed bottom plan view of the head assembly according to the fourth preferred embodiment;
FIG. 10A is an elevational view of a reinforcing plate in the fourth preferred embodiment, and FIG. 10B is an enlarged view of an encircled portion 10B in FIG. 10A;
FIG. 11 is a perspective view of a head assembly according to a fifth preferred embodiment of the present invention;
FIG. 12A is an exploded longitudinal sectional view of a head assembly according to a sixth preferred embodiment of the present invention, and FIG. 12B is a longitudinal sectional view of the head assembly shown in FIG. 12A; and
FIG. 13 is a longitudinal sectional view of a head assembly according to a seventh preferred embodiment of the present invention.

Various preferred embodiments of the present invention will now be described with reference to the drawings. Throughout the drawings, substantially the same parts are denoted by the same reference numerals.

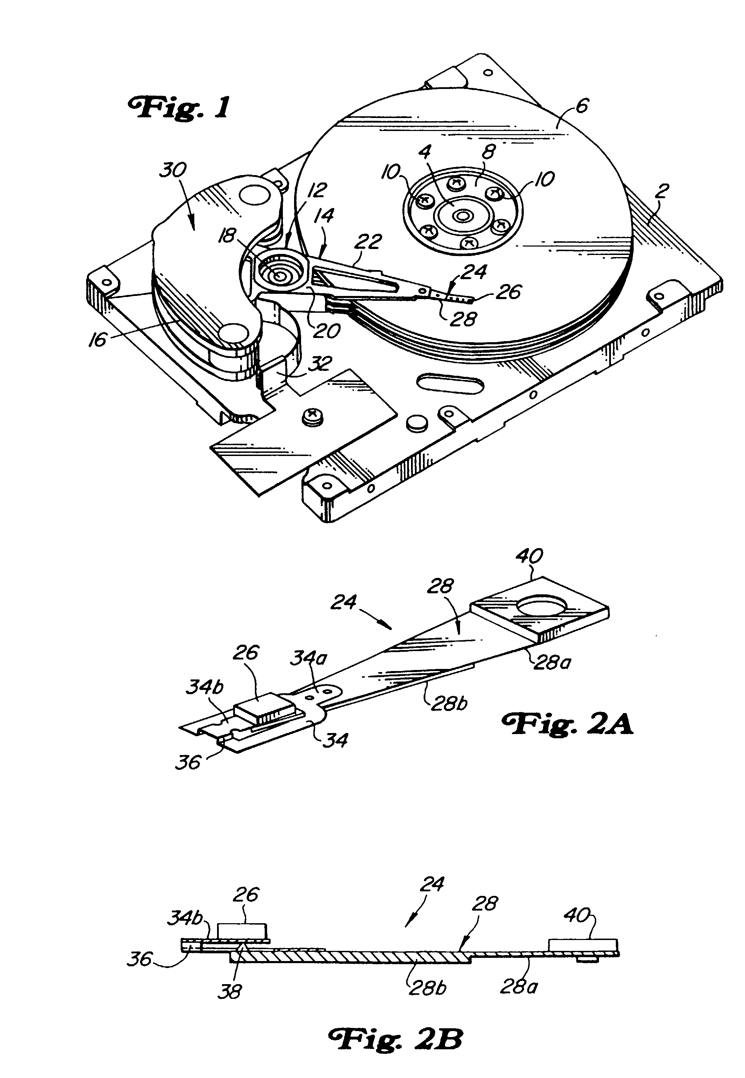

Referring to FIG. 1, there is shown a perspective view of a magnetic disk drive with its cover removed. Reference numeral 2 denotes a base. A shaft 4 is fixed to the base 2. A spindle hub (not shown) is rotatably mounted on the shaft 4 so as to be driven by a DC motor (not shown).

A plurality of magnetic disks 6 and spacers (not shown) are mounted on the spindle hub in such a manner as to be alternately stacked. That is, the plural magnetic disks 6 are fixedly mounted on the spindle hub by securing a disk clamp 8 to the spindle hub by a plurality of screws 10, and are equally spaced a given distance by the spacers.

Reference numeral 12 denotes a rotary actuator consisting of an actuator arm assembly 14 and a magnetic circuit 16. The actuator arm assembly 14 is mounted so as to be rotatable about a shaft 18 fixed to the base 2.

The actuator arm assembly 14 includes an actuator block 20 rotatably mounted through a pair of bearings on the shaft 18, a plurality of actuator arms 22 extending from the actuator block 20 in one direction, and a head assembly 24 fixed to a front end portion of each actuator arm 22.

Each head assembly 24 includes a head slider 26 having a magnetic head element for reading/writing data from/to the corresponding magnetic disk 6, and a load beam 28 having a front end portion for supporting the head slider 26 and a base end portion fixed to the corresponding actuator arm 22. Please note that it is contemplated that the head slider 26 may instead include a magneto-optical element, or a combination of a magnetic head element and magneto-optical element.

A coil (not shown) is supported to the actuator block 20 at its portion opposite to the actuator arms 22 with respect to the shaft 18. The magnetic circuit 16 and the coil inserted in a gap of the magnetic circuit 16 constitute a voice coil motor (VCM) 30.

Reference numeral 32 denotes a flexible printed circuit board (FPC) for supplying a write signal to the magnetic head element and for taking a read signal from the magnetic head element. The flexible printed circuit board 32 is fixed at its one end to a side surface of the actuator block 20.

FIG. 2A is a perspective view of the head assembly 24 showing a first preferred embodiment of the present invention, and FIG. 2B is a longitudinal sectional view of the head assembly 24 shown in FIG. 2A. The load beam 28 is formed of stainless steel, for example, and has a spring portion 28a and a rigid portion 28b.

As best shown in FIG. 2B, only the thickness of the spring portion 28a is reduced by etching or the like, so that the rigidity of the rigid portion 28b remains relatively large.

The thickness of the rigid portion 28b is about 1.5 to about 3.0 times (and is preferably about 2.0 to about 2.5 times) the thickness of the spring portion 28a. For example, the spring portion 28a can have a thickness of 22 µm, and the rigid portion 28b can have a thickness of 52 µm.

A gimbal 34 is affixed (by spot-welding, for example) to a front end portion of the load beam 28. The gimbal 34 is formed of stainless steel, for example, and has a thickness of about 20 µm.

The gimbal 34 is formed with a step 36, so that the gimbal 34 includes a fixed portion 34a fixed to the load beam 28 and a slider mounting portion 34b raised by a given height from the fixed portion 34a.

The magnetic head slider 26 is fixed to the upper surface of the slider mounting portion 34b by adhesive or the like. A pivot (projection) 38 is formed at a front end portion of the load beam 28. The tip of the pivot 38 is in contact with the lower surface of the slider mounting portion 34b of the gimbal 34 to support the head slider 26.

A spacer 40 formed of stainless steel, for example, is fixed to a base end portion of the load beam 28 by spot welding or the like. The head assembly 24 is fixed by crimping to a front end portion of the actuator arm 22 (see FIG. 1) by a well-known method.

In the case that the rigid portion of the load beam is formed by a pair of ribs as in the prior art, the bending stiffness of the rigid portion can be sufficiently improved, but the torsional stiffness thereof cannot be improved as mentioned previously.

In this preferred embodiment, the rigid portion 28b of the load beam 28 has an increased thickness as compared with the prior art, thereby increasing both the bending stiffness and the torsional stiffness. Because both the bending stiffness and the torsional stiffness are proportional to the cube of a beam thickness, the resonant point of the head assembly 24 can be increased.

Further, the rigid portion 28b of the load beam 28 has no ribs, so that there is no possibility that the rigid portion 28b may oscillate in the air flow caused by high-speed rotation of the magnetic disk, thereby eliminating instability of positioning of the magnetic head slider.

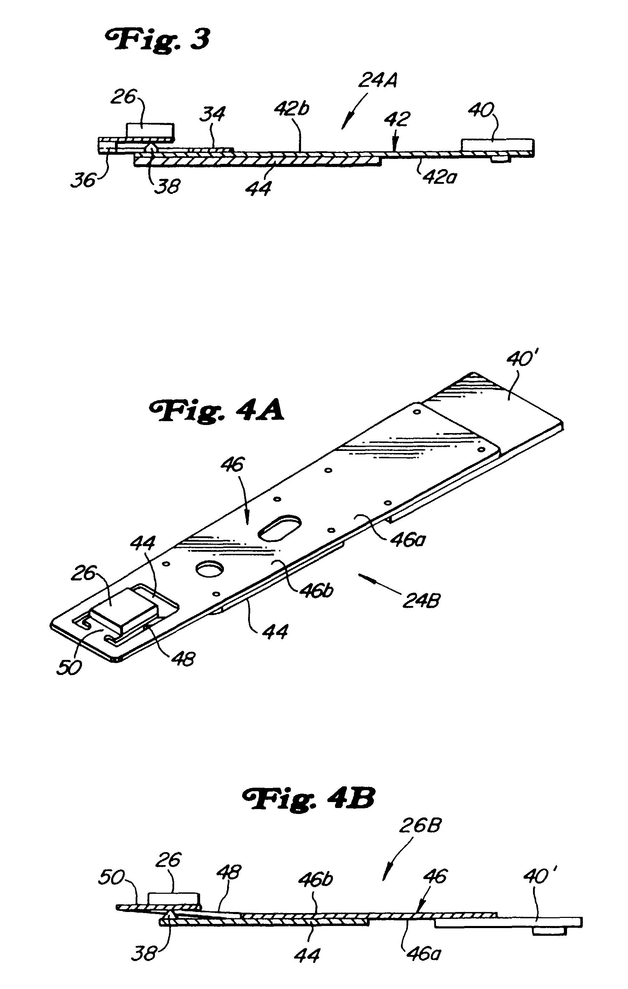

FIG. 3 is a longitudinal sectional view of a head assembly 24A according to a second preferred embodiment of the present invention. The head assembly 24A employs a flat load beam 42 having a uniform thickness.

The load beam 42 is formed of stainless steel, for example, and its thickness is about 25 pm. The load beam 42 has a spring portion 42a for applying a load to the head slider 26 (for biasing the head slider 26 against the magnetic disk) and a rigid portion 42b.

A reinforcing plate (backing plate) 44 formed of stainless steel, for example, is fixed to the lower surface of the rigid portion 42b by spot welding or the like. The reinforcing plate 44 has a thickness about 1.0 to about 2.0 times (and preferably about 1.3 to about 1.5 times) the thickness of the load beam 42. The other features of this preferred embodiment are similar to those of the first preferred embodiment, so the descriptions thereof will be omitted herein.

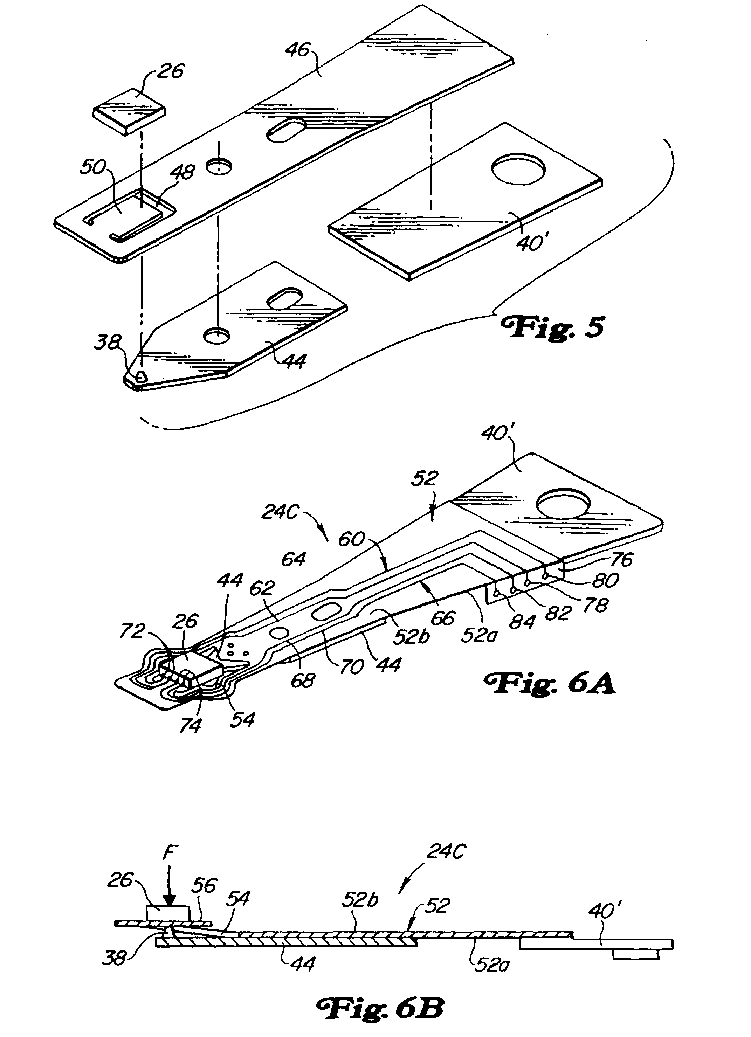

FIG. 4A is a perspective view of a head assembly 24B according to a third preferred embodiment of the present invention, and FIG. 4B is a longitudinal sectional view of the head assembly 24B shown in FIG. 4A. FIG. 5 is an exploded perspective view of the head assembly 24B shown in FIG. 4A.

As best shown in FIG. 5, this preferred embodiment employs a flat load beam 46 having a uniform thickness and integrally formed with a gimbal 50. That is, the load beam 46 is formed at its front end portion with a U-shaped slit 48 to thereby define the gimbal 50 inside the U-shaped slit 48. The load beam 46 is formed of stainless steel, for example, and its thickness is about 22 µm.

The load beam 46 includes a spring portion 46a for biasing a head slider 26 against the magnetic disk and a rigid portion 46b. A reinforcing plate 44 is fixed to the lower surface of the rigid portion 46b by spot welding or the like.

The reinforcing plate 44 is formed of stainless steel, for example, and has a thickness about 1.0 to about 2.0 times (and preferably about 1.3 to about 1.5 times) the thickness of the load beam 46.

By setting the thickness of the reinforcing plate 44 to the above range, the resonant frequency of the head assembly 24B can be increased, and an increase in mass of the head assembly 24B can be minimized. If the thickness of the reinforcing plate 44 is less than the thickness of the load beam 46, the rigidity of the rigid portion 46b is reduced to result in a decrease in resonant frequency.

If the thickness of the reinforcing plate 44 is greater than twice the thickness of the load beam 46, an increase in the mass of the head assembly 24B can cause a decrease in separation acceleration at which the magnetic head slider 26 is separated from the disk, thus causing a reduction in impact resistance.

While the load beam 46 is flat, the spring portion 46a is curved in actual use, so as to bias the magnetic head slider 26 against the magnetic disk.

A spacer 40' formed of stainless steel is spot-welded to the lower surface of a base end portion of the load beam 46. A pivot 38 is formed at a front end portion of the reinforcing plate 44, and the tip of the pivot 38 is in contact with the lower surface of the gimbal 50 to support the magnetic head slider 26.

In this preferred embodiment, the stiffness of a front portion of the gimbal 50 and the stiffness of a rear portion of the gimbal 50 with respect to the pivot 38 are set equal to each other. Accordingly, the magnetic head slider 26 is not inclined regardless of the pressure of the pivot 38 applied to the lower surface of the gimbal 50. Accordingly, a load can be applied to the magnetic head slider 26 without producing a moment, thereby realizing a stable flying height.

Further, a pivot friction upon loading can be increased by a preload from the pivot 38. Accordingly, although the loading force of the spring portion 46a applied from the magnetic head slider 26 to the magnetic disk is small, a high pivot slip limit can be maintained.

Unlike the prior art, it is unnecessary to form a step on the gimbal 50, thereby reducing production costs. Further, the reinforcing plate 44 supports the rigid portion 46b of the load beam 46, and no ribs are required to be formed on the rigid portion 46b. Accordingly, it is possible to suppress oscillating of the load beam 46 in the air flow caused by high-speed rotation of the magnetic disk.

In this preferred embodiment, a slider load to the magnetic disk in a loaded condition when the magnetic head slider 26 is loaded on the disk is set to 1 gf or less, and the gimbal 50 is preloaded by the pivot 38 in an unloaded condition. The total weight of the head assembly 24B is about 40 mg, and the weight of the spacer 40' is about 35 mg, for example.

FIG. 6A is a perspective view of a head assembly 24C according to a fourth preferred embodiment of the present invention, and FIG. 6B is a longitudinal sectional view of the head assembly 24C shown in FIG. 6A. In this preferred embodiment, a plurality of signal lines are printed on the load beam shown in FIG. 4A.

Reference numeral 52 denotes a load beam formed of stainless steel, for example. Like the third preferred embodiment, the load beam 52 includes a spring portion 52a and a rigid portion 52b. A reinforcing plate 44 is spot-welded to the lower surface of the rigid portion 52b of the load beam 52.

The total length of the head assembly 24C is 16.0 mm, and the maximum width of the head assembly 24C is 4.4 mm at its base end where a spacer 40' is fixed. The load beam 52 has a thickness of 22 µm and a weight of 2.4 mg.

The load beam 52 is integrally formed at its front end portion with a gimbal 56. That is, a substantially U-shaped slit 54 is formed at the front end portion of the load beam 52 to thereby define the gimbal 56 inside the slit 54. A magnetic head slider 36 is fixed to the upper surface of the gimbal 56 by adhesive or the like.

A pivot 38 is formed at a front end portion of the reinforcing plate 44. The pivot 38 is in contact with the lower surface of the gimbal 56 to thereby support the magnetic head slider 26. The reinforcing plate 44 has a total length of 5.0 mm, a maximum width of 2.0 mm, a thickness of 30 µm, and a weight of 1.4 mg, for example.

The reinforcing plate 44 is formed of stainless steel, for example, and has a thickness between about 1.0 to about 2.0 times (and preferably about 1.3 to about 1.5 times) the thickness of the load beam 52.

By setting the thickness of the reinforcing plate 44 to the above range, the resonant frequency of the head assembly 24C can be increased, and an increase in mass of the head assembly 24C can be minimized. If the thickness of the reinforcing plate 44 is less than the thickness of the load beam 52, the rigidity of the rigid portion 52b is reduced to result in a decrease in resonant frequency.

If the thickness of the reinforcing plate 44 is greater than twice the thickness of the load beam 52, an increase in the mass of the head assembly 24C can cause a decrease in separation acceleration at which the magnetic head slider 26 is separated from the disk, thus causing a reduction in impact resistance.

While the load beam 52 is flat, the spring portion 52a is curved in actual use, so as to bias the magnetic head slider 26 against the magnetic disk.

A spacer 40' formed of stainless steel is spotwelded to the lower surface of a base end portion of the load beam 52. A pivot 38 is formed at a front end portion of the reinforcing plate 44, and the tip of the pivot 38 is in contact with the lower surface of the gimbal 50 to support the magnetic head slider 26.

The pivot 38 has a height of 50 µm, and the magnetic head slider 26 has a length of 1.2 mm, a width of 1.0 mm, a height of 0.3 mm, and a weight of 1.6 mg. It should be noted that these dimensions and weights, as well as others throughout the specification, are provided for the purpose of example only, and that other dimensions and weights may also be used.

In this preferred embodiment, the stiffness of a front portion of the gimbal 56 and the stiffness of a rear portion of the gimbal 56 with respect to the pivot 38 are set to be equal to each other. Accordingly, the magnetic head slider 26 is not inclined regardless of the pressure of the pivot 38 applied to the lower surface of the gimbal 56. Accordingly, a load can be applied to the magnetic head slider 26 without producing a moment, thereby realizing a stable flying height. In other words, the magnetic head slider 26 is displaced vertically when pushed by the pivot 38 without producing any rotation. Therefore, no undue moment is produced.

As shown in FIG. 6B, the gimbal 56 is slightly raised from the upper surface of the load beam 52 by the pivot 38. Accordingly, a preload F is positively applied to the gimbal 56 in an unloaded condition of the head slider 26. The gimbal 56 is maintained substantially parallel to the load beam 52.

Since in-plane stiffness of the gimbal 56 is low due to its small thickness of 22 µm, slippage may occur between the magnetic head slider 26 and the pivot 38 during high speed seeking operations. A simple method to prevent the slippage is to increase the load at a contact point. According to this embodiment, although the loading force of the spring portion 52a applied from the magnetic head slider 26 to the magnetic disk is less than 1 gf, enough frictional force is generated between the pivot 38 and the lower surface of the gimbal 50 supporting the magnetic head slider 26 due to the positive preload F applied to the gimbal 56 in an unloaded condition of the head slider 26. Therefore, a high pivot limit can be maintained during high speed seeking operations.

As shown in FIG.6A, an MR wiring pattern 60 and a coil wiring pattern 66 are formed by printing on the upper surface of the load beam 52. The MR wiring pattern 60 consists of a pair of lead lines 62 and 64, and the coil wiring pattern 66 consists of a pair of lead lines 68 and 70. Each of the lead lines 62, 64, 68, and 70 is formed mainly of copper, and gold is deposited on the copper through nickel by evaporation.

The lead lines 62 and 64 have first ends respectively connected to the terminals of a magnetoresistive element (MR element) (which will be described later) in the magnetic head slider 26 by bonding through gold balls 72. On the other hand, the lead lines 68 and 70 have first ends respectively connected to the terminals of a coil (which will be described later) in the magnetic head slider 26 by bonding through gold balls 74.

A tab 76 is formed at one side edge of the load beam 52, and four terminals 78, 80, 82 and 84 are formed on the tab 76. The terminals 78, 80, 82, and 84 are connected to second ends of the lead lines 62, 64, 68, and 70, respectively.

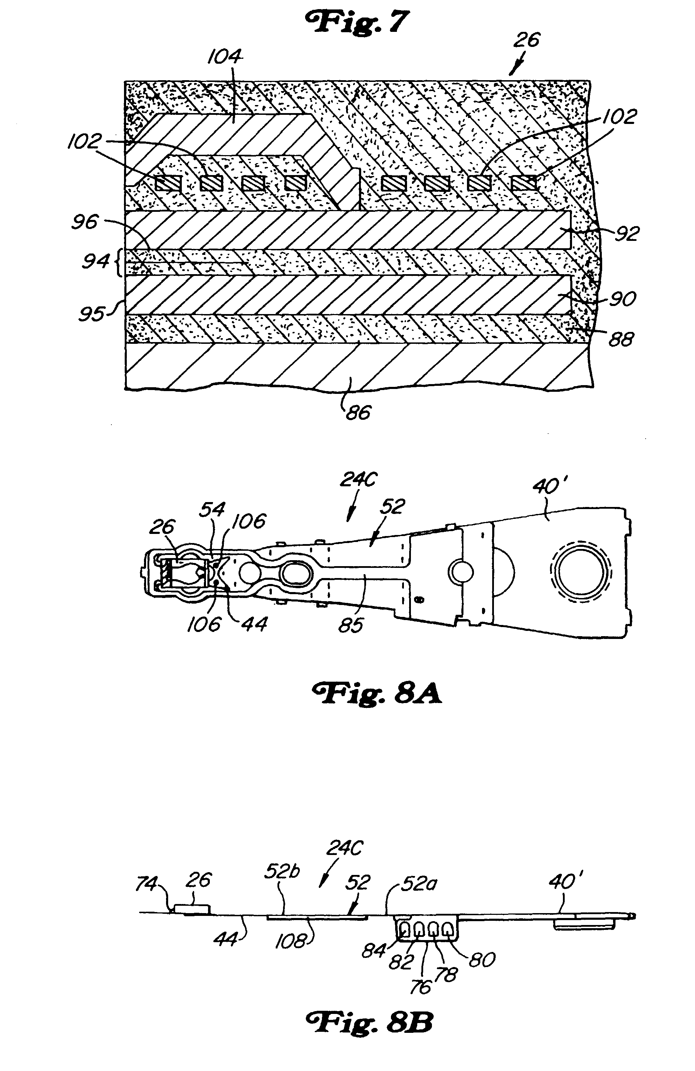

As shown in FIG. 7, the magnetic head slider 26 has a conductive substrate 86 and a nonmagnetic insulating layer 88 formed on the conductive substrate 86. The nonmagnetic insulating layer 88 is formed of alumina (Al₂O₃), for example.

First and second magnetic shields 90 and 92 formed of nickel-iron (Ni-Fe), for example, are embedded in the nonmagnetic insulating layer 88. A gap 94 for improving the reproductive resolution is defined between the first and second magnetic shields 90 and 92 on a front end surface (medium opposing surface) 95 of the head slider 26.

A magnetoresistive element (MR element) 96 formed of nickel-iron (Ni-Fe) is embedded in the gap 94 so as to be exposed to the front end surface 95 of the head slider 26.

Although not shown, a sense current source is connected to a pair of terminals of the magnetoresistive element 96 to supply a constant sense current to the magnetoresistive element 96.

Reference numeral 104 denotes a magnetic pole having one end exposed to the front end surface 95 of the head slider 26 and the other end connected to the second magnetic shield 92. A conductor coil 102 is wound substantially around a connected portion between the magnetic pole 104 and the second magnetic shield 92.

By passing a current modulated by information to be recorded through the coil 102, a magnetic field having a strength corresponding to the amperage of the modulated current is induced to thereby magnetically record the information on a recording track of the magnetic disk 6.

In reading information recorded on the magnetic disk 6, the magnetoresistive element 96 is used. That is, a signal of magnetic flux from a recording track of the magnetic disk 6 is received into the head slider 26 to enter the magnetoresistive element 96 and thereby magnetize it. The magnetic flux passed through the magnetoresistive element 96 is absorbed by the first and second magnetic shields 90 and 92.

The resistance of the magnetoresistive element 96 changes with a change in magnitude of the signal magnetic flux. Because a constant sense current is supplied from the sense current source to the magnetoresistive element 96, a voltage between the pair of terminals of the magnetoresistive element 96 changes with a change in the resistance. Thus, the information recorded on the magnetic disk 6 can be reproduced as a voltage signal.

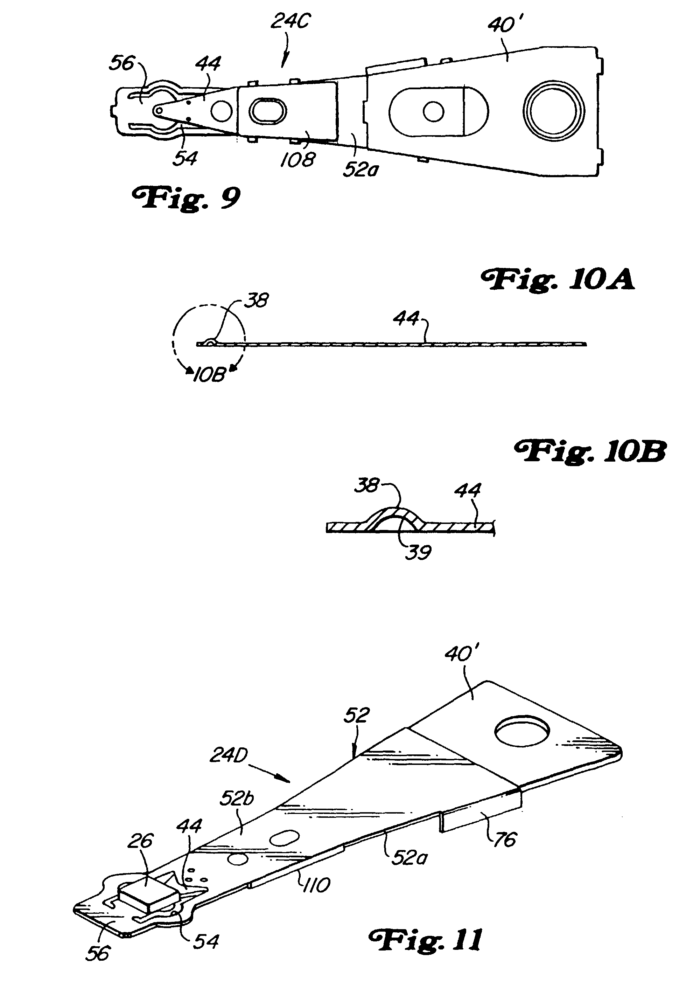

FIG. 8A is a detailed top plan view of the head assembly 24C shown in FIG. 6A, and FIG. 8B is an elevational view of FIG. 8A. FIG. 9 is a detailed bottom plan view of the head assembly 24C.

In FIG. 8A, the MR wiring pattern 60 and the coil wiring pattern 66 are not shown. These wiring patterns are covered with an insulating film 85.

As shown in FIG. 8A, a pair of through holes 106 are formed at a front end portion of the reinforcing plate 44. The through holes 106 can be visually recognized through the slit 54, so that the through holes 106 can be used as reference holes in positioning the head slider 26 on the gimbal 50.

In assembling the head assembly 24C, the through holes 106 are visually recognized and the head slider 26 is automatically mounted on the gimbal 56 at a given position by an assembly robot.

As shown in FIGS. 8B and 9, a damper member 108 is bonded to the lower surface of the reinforcing plate 44. The damper member 108 is a double-sided adhesive tape, for example, used to improve the balance of the head assembly 24C.

Referring to FIG. 10A, there is shown an elevational view of the reinforcing plate 44. FIG. 10B is an enlarged view of an encircled portion 10B in FIG. 10A. The pivot 38 is formed by extrusion of the reinforcing plate 44 with a height of 50 µm, for example. To improve the strength of the pivot 38, a spherical member may be fitted into an indentation 39 formed behind the pivot 38 and fixed thereto by adhesive or the like.

As a modification, a spherical member or a semispherical member may be fixed as the pivot 38 to the upper surface of the front end portion of the reinforcing plate 44 by adhesive or the like. As another modification, the pivot 38 may be formed on the lower surface of the gimbal 50 so as to make contact with the upper surface of the front end portion of the reinforcing plate 44.

FIG. 11 is a perspective view of a head assembly 24D according to a fifth preferred embodiment of the present invention. The head assembly 24D is suitable for a magnetic disk drive in which magnetic disks are rotated at relatively low speeds.

In such a magnetic disk drive wherein magnetic disks are rotated at relatively low speeds, there is almost no possibility of disturbance of an air flow due to rotation of the magnetic disks. Accordingly, a pair of ribs 110 are formed at the opposite side edges of a rigid portion 52b of a load beam 52 to ensure the bending stiffness of the rigid portion 52b. In this case, the thickness of a reinforcing plate 44 can be reduced.

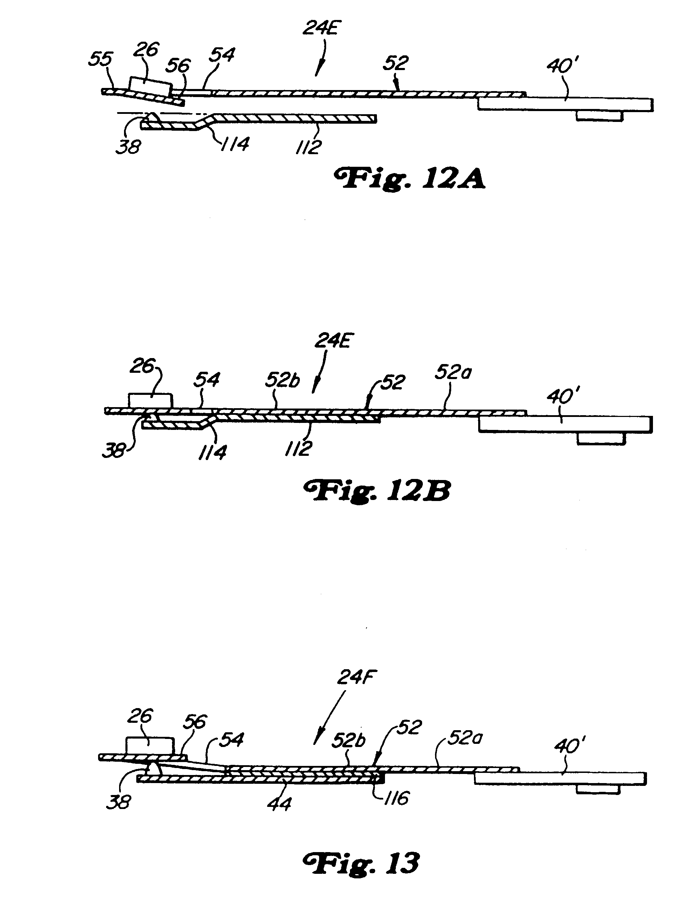

FIG. 12B is a longitudinal sectional view of a head assembly 24E according to a sixth preferred embodiment of the present invention. FIG. 12A is a view similar to FIG. 12B, showing a condition before fixing a reinforcing plate 112 to a load beam 52.

In this preferred embodiment, the reinforcing plate 112 has a step 114 corresponding to the height of a pivot 38. Accordingly, the tip of the pivot 38 is flush with the upper surface of the reinforcing plate 112 fixed to the lower surface of the load beam 52.

As shown in FIG. 12A, a gimbal 56 is preliminarily bent at its neck portion 55 toward the pivot 38. Accordingly, when the reinforcing plate 112 is fixed to the load beam 52 as shown in FIG. 12B, the upper surface of the reinforcing plate 112 fixed to the lower surface of the load beam 52 is substantially parallel to the upper surface of the gimbal 56 on which a magnetic head slider 26 is mounted.

Accordingly, no bending moment acts on the magnetic head slider 26 even in the condition where a preload is applied from the pivot 38 to the gimbal 56. The magnitude of the preload to be applied can be controlled according to a bending angle of the neck portion 55 of the gimbal 56.

According to this preferred embodiment, the preload by the pivot 38 can be set to a large value, so that even when the loading force of a spring portion 52a applied from the head slider 26 to the disk is small, pivot friction in a seek direction can be increased to thereby prevent slip of the pivot 38 in the seeking motion of the head assembly. The loading force of the spring portion 52a from the head slider 26 to the disk is set preferably to 1 gf or less.

FIG. 13 is a longitudinal sectional view of a head assembly 24F according to a seventh preferred embodiment of the present invention. In this preferred embodiment, a damper member 116 is interposed between a reinforcing plate 44 and a load beam 52.

By using the damper member 116, the peak of a resonance can be lowered to thereby improve the accuracy of positioning of a magnetic head slider 26. The damper member 116 is formed of a viscoelastic material, for example. In this case, vibrations can be absorbed by utilizing the viscous resistance mechanism of the viscoelastic material.

By using the viscoelastic material for the damper member 116, it can serve also as a bonding member for bonding the reinforcing plate 44 to the load beam 52, thereby allowing easy assembly of the head assembly 24F.

The advantages of the present invention are now apparent. Both the bending stiffness and the torsional stiffness of the rigid portion of the load beam can be increased. As a result, the resonant point in the seek direction can be increased to thereby achieve high-accuracy positioning of the magnetic head slider.

Further, it is unnecessary to carry out bending for forming ribs at the rigid portion of the load beam. Accordingly, the rigid portion hardly receives disturbance from the air flow caused by the high-speed rotation of the magnetic disks.

Further, since a preload by the pivot is applied to the gimbal, the frictional force between the pivot and the gimbal can be increased by the preload in spite of the event that the biasing pressure from the head slider to the disk in loading is small. Thus, slippage of the pivot can be prevented.

While the principles of the invention have been described above in connection with specific apparatus and applications, it is to be understood that this description is made only by way of example and not as a limitation on the scope of the invention.

## Claims

1. A head assembly comprising:
a load beam including a first portion having a first thickness and a second portion having a second thickness larger than said first thickness;
a gimbal provided at said second portion of said load beam; and
a head slider mounted on said gimbal.

2. The head assembly according to claim 1, wherein:
said gimbal includes a fixed portion fixed to said load beam and a slider mounting portion for mounting said head slider; and
said load beam has a pivot kept in contact with said slider mounting portion to support said head slider.

3. The head assembly according to claim 1 or 2, wherein a load applied from said head slider to a disk in loading said head slider onto said disk is set to 1 gf or less.

4. The head assembly according to claim 1, 2 or 3, wherein said second thickness is about 1.5 to about 3.0 times said first thickness.

5. The head assembly according to claim 1, 2 or 3, wherein said second thickness is about 2.0 to about 2.5 times said first thickness.

6. The head assembly according to any preceding claim, wherein said second thickness is obtained by affixing a reinforcing plate to a portion of said load been.

7. The head assembly according to any of claims 1 to 5, wherein both said first portion and said second portion of said load beam are formed from a single unitary member having different thicknesses thereof.

8. A head assembly comprising:
a flat load beam having a substantially uniform thickness;
a reinforcing plate fixed to a portion of said load beam, said reinforcing plate having a thickness of between about 1.0 to about 2.0 times said uniform thickness of said flat load beam;
a gimbal provided at said portion of said load beam; and
a head slider mounted on said gimbal;
wherein said gimbal is integral with said load beam and has a slider mounting portion for mounting said head slider; and
further wherein said reinforcing plate has a pivot kept in contact with said slider mounting portion of said gimbal to support said head slider.

9. The head assembly according to claim 8, wherein said reinforcing plate has a thickness about 1.3 to about 1.5 times said uniform thickness of said flat load beam.

10. The head assembly according to claim 8 or 9, further comprising a wiring pattern extending from said slider mounting portion along said load beam and connected to signal terminals of said head slider.

11. The head assembly according to claim 8, 9 or 10, wherein said plate has a step formed so that the tip of said pivot is substantially flush with said load beam in the condition where said reinforcing plate is fixed to said load beam.

12. The head assembly according to any of claims 8 to 11, wherein said slider mounting portion is preliminarily bent toward said pivot, so that when said reinforcing plate is fixed to said load beam, said slider mounting portion is pushed back by said pivot to become substantially parallel to said reinforcing plate.

13. The head assembly according to any of claims 8 to 12 further comprising a damper member interposed between said load beam and said reinforcing plate.

14. The head assembly according to any of claims 8 to 13, wherein said reinforcing plate has a reference hole used in positioning said head slider on said gimbal

15. A disk drive comprising:
a housing;
an actuator arm rotatably mounted in said housing;
an actuator mounted to said actuator arm for moving said actuator arm;
a load beam mounted to said actuator arm and including a first portion having a first thickness and a second portion having a second thickness larger than said first thickness;
a gimbal provided at said second portion of said load beam; and
a head slider mounted on said gimbal for reading/writing data from/to a rotating disk.

16. The disk drive according to claim 15 , wherein said second thickness is obtained by affixing a reinforcing plate to a portion of said load beam.

17. The disk drive according to claim 15, wherein both said first portion and said second portion of said load beam are formed from a single unitary member having different thicknesses thereof.

18. A disk drive comprising:
a housing;
an actuator arm rotatably mounted in said housing;
an actuator mounted to said actuator arm for moving said actuator arm;
a flat load beam mounted to said actuator arm and having a uniform thickness;
a reinforcing plate fixed to a portion of said load beam, said reinforcing plate having a thickness of between about 1.0 to about 2.0 times said uniform thickness of said flat load beam;
a gimbal provided at said portion of said load beam; and
a head slider mounted on said gimbal for reading/writing data from/to a rotating disk;
wherein said gimbal is integral with said load beam and has a slider mounting portion for mounting said head slider; and
wherein said reinforcing plate has a pivot kept in contact with said slider mounting portion of said gimbal to support said head slider.
